# EUROPEAN PATENT SPECIFICATION

(11) **EP 2 809 969 B1**
(45) Date of publication and mention of the grant of the patent: **11.07.2018**
(21) Application number: 13708869.6
(22) Date of filing: 30.01.2013
(51) Int. Cl.: F16G 11/08, F16G 15/04

(54) **A CONNECTOR**
VERBINDER
CONNECTEUR

(30) Priority: 30.01.2012 GB 201201510
(43) Date of publication of application: 10.12.2014
(73) Proprietor: Balltec Limited, Morecambe, Lancashire LA3 3PB (GB)
(72) Inventor: TAYLOR, Richard James, Kendal Cumbria LA9 6FF (GB); JACKSON, Jonathan Fletcher, Stalmine Poulton-le-Fylde FY6 0QA (GB); PRESTON, Jonathan Scott, Houghton Preston PR5 0HQ (GB)
(74) Representative: Wilson Gunn
(86) International application number: PCT/GB2013/050202
(87) International publication number: WO 2013/114105

(56) References cited:
- GB-A- 2 436 920
- US-A- 4 568 221
- US-A- 4 676 696
- US-A1- 2011 240 403

## Description

### Technical Field of the Invention

The present invention relates to a connector and particularly, although not exclusively, to a connector suitable for use as a subsea mooring connector.

### Background to the Invention

Subsea mooring connectors are employed in a variety of applications, but are typically used for connecting mooring lines (usually chains) used to anchor offshore installations. For example, a subsea connector may be used to connect lengths of chain used to anchor an offshore platform to the sea bed.

Such mooring connectors need to be able to withstand significant loads as well as being able to be connected, and possibly disconnected, in challenging undersea conditions.

One conventional type of connector employs a load bearing pin to connect two connector parts together, such as a device and pad eye. Such connectors have the advantage of being simple and robust. However, it can be difficult to establish a connection under sea when working remotely because of the need to align the two connector parts and maintain the parts in alignment whilst the pin is inserted. Consequently, such connectors tend not to be employed in subsea applications.

Another type of known connector comprises a receptacle into which a mandrel is received such as that, for example, shown in WO2006/109065. This connector is more suited to remote operation under sea since it is only necessary to insert the mandrel into the receptacle in order to establish a connection. However, the connector is complex and therefore relatively costly to manufacture.

US4568221 discloses a device for anchoring underwater pipes in a fixed sleeve according to the preamble of claim 1. Embodiments of the present invention have been made in consideration of these issues.

### Summary of the Invention

According to the present invention, as defined in claim 1, there is provided a connector comprising first and second connectable parts, each part comprising a respective structure arranged so that, when the two parts are brought together and appropriately aligned with each other, a locking member may be engaged with the two respective parts to connect them together, wherein the connectable parts comprise respective mutually cooperating formations arranged such that, as the connectable parts are brought together, engagement of the respective cooperating formations causes the two parts to move relative to one another so that they align sufficiently to enable the locking member to be engaged with the respective structures.

Provision of cooperating formations serves to automatically align the connector parts as they are brought together. This overcomes or at least reduces the need, such as with conventional connectors employing a locking pin, to take steps to align the parts before engaging the locking member and so facilitates remote use of the connector.

The locking member may be a locking pin. At least one of the parts may comprise an aperture through which a locking member may be received. Both parts may comprise an aperture. The or each aperture may be substantially circular in cross-section.

The first part may be a female part and the second part a male part which may be received into the female part.

The cooperating formations may be arranged such that contact between the formations as the male part is introduced into the female part causes the male part to rotate relatively to the female part in order to align the structures of each part appropriately.

In one embodiment the cooperating formation on one part comprises a protrusion and the cooperating formation on the other part comprises a profiled surface such as a shoulder or groove.

In one embodiment the female part defines a bore. An aperture extends from an outside surface of the part into the bore and a formation projects from an inside surface of the bore. The male part comprises a portion arranged to be received into the bore of the female part. An aperture extends into the portion of the male part and a cooperating formation is formed on the surface of that portion. The connector is arranged such that, as the male part is introduced into the bore of the female part, contact between the respective cooperating formations causes the two parts to rotate relative to each other so that when the male part is fully received into the female part the aperture in the female part is sufficiently aligned with the aperture in the male part to enable a locking member to be introduced through the aperture in the female part into the male part, thereby to lock the two parts relative to each other.

In another embodiment the cooperating formations on each part comprise profiled surfaces.

The first part may comprise a forked member, defining a slot into which the other part is received. An aperture may extend through one or more prongs forming the slot. The second part may comprise formation to be received into the slot. An aperture may extend through the formation and be arranged to align with an aperture in the one or more prongs to enable a locking member to extend through both apertures and lock the two parts together.

The forked member may be disposed in a housing and, together the housing, form a female part. The housing may define an opening for receiving the second part, which may be a male part. The opening may be flared, for example by fitting a frustro-conical collar, to help guide the second part into the housing. A sleeve may be provided in the housing to receive the second part.

A locking means may be provided to lock a locking member relative to the first and second members.

Such connectors are particularly suited to subsea operations. The male part may be simply lowered into the bore of the female part. When the male part has been fully lowered into the female part a remotely operated vehicle (ROV) may be used to introduce a locking member, such as a locking pin, through the aperture in the female part into the aperture in the male part thereby to lock the two parts together. It is not necessary to intervene to ensure that the two parts are correctly aligned. Thus, the connector provides the strength and simplicity of a conventional locking pin connector but with the ease of operation of more sophisticated receptacle and mandrel type connectors.

### Detailed Description of the Invention

In order that the invention may be more clearly understood embodiments thereof will now be described, by way of example only, with reference to the accompanying drawings, of which:
- Figure 1: is a perspective view of a female part of a first embodiment of a connector;
- Figure 2: is a plan view of the part of figure 1;
- Figure 3: is a front elevation of the part of figure 1;
- Figure 4: is a side elevation of the part of figure 1;
- Figure 5: is a cross-section along the line A-A of figure 3;
- Figure 6: is a cross-section along the line B-B of figure 4;
- Figure 7: is a perspective view of a male part of the connector;
- Figure 8: is a plan view of the part of figure 7;
- Figure 9: is a front elevation of the part of figure 7;
- Figure 10: is a side elevation of the part of figure 7;
- Figure 11: is a front elevation of the part of figure 1 received into the part of figure 7;
- Figure 12: is a side elevation of the assembly of figure 11;
- Figure 13: is a cross-section along the line C-C of figure 11;
- Figure 14: is a cross-section along the line D-D of figure 12; and
- Figure 15: is an exploded, perspective view of a first part of a second embodiment of a connector;
- Figure 16: is a perspective view of a second part of the connector;
- Figure 17: is a perspective view of a forked connector body of the part of figure 15
- Figure 18: is a perspective view of the part of figure 16 received into the part of figure 15;
- Figure 19: is a cross-section along the line E-E of figure 18;
- Figure 20: is a plan view of the arrangement of figure 18 showing detail of a locking pin;
- Figure 21: is a plan view of the part of figure 15 showing a non-engagement zone; and
- Figure 22: is a perspective view of the second embodiment of a connector mounted to a pile.

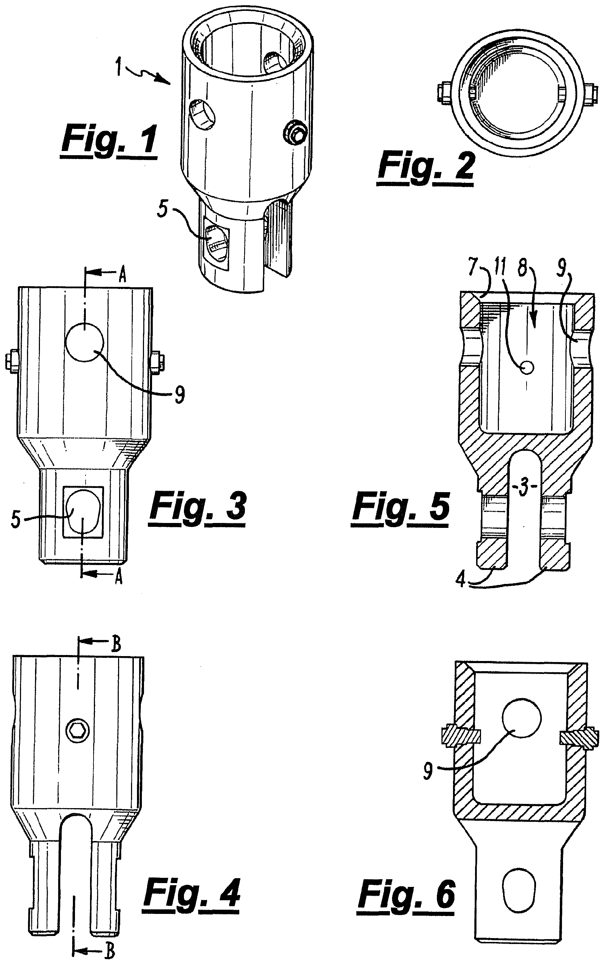

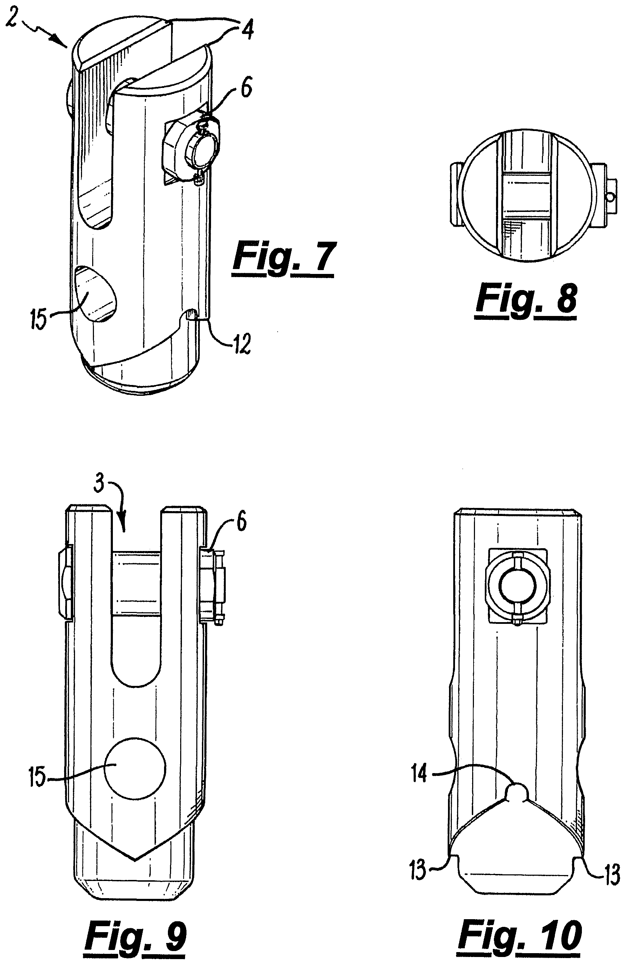

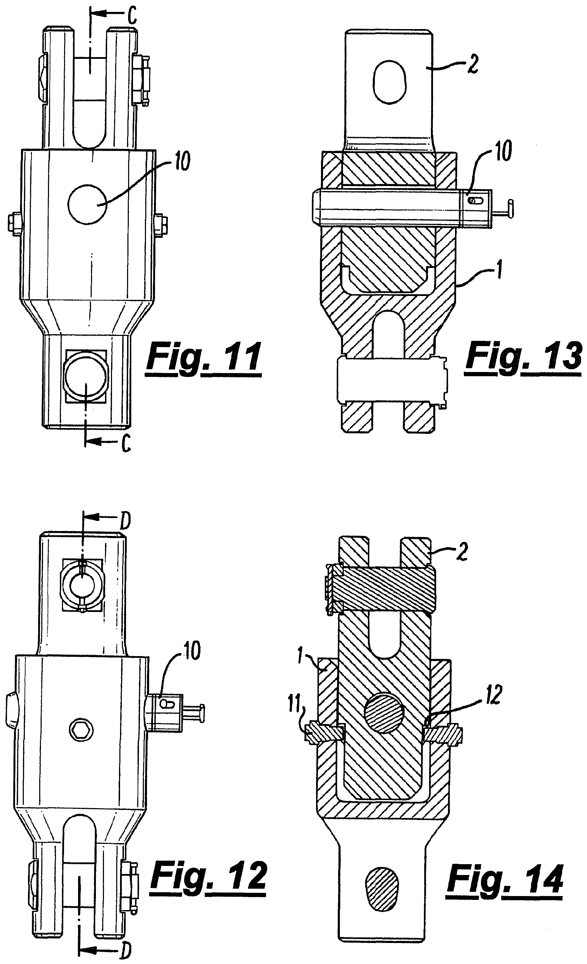

Referring to figures 1 to 14 of the drawings there is shown a first embodiment of a subsea mooring connector, for use in connecting together two lengths of chain, or other mooring line, such as may be used for mooring an off shore installation such as a hydrocarbon production or drilling platform.

The connector comprises a female part 1 arranged to accept a male part 2. A slot 3 is formed through one end of each part, forming a forked end with two parallel spaced apart portions 4. Aligned apertures 5 extend respectively through each portion for receiving a fastening pin 6. A pad eye may be received between the two portions 4 and the fastening pin 6 passed through the apertures 4 and an aperture in the pad eye to secure the pad eye, and a mooring chain connected to the pad eye, to the connector part. Alternatively, the fastening pin of a shackle could be passed through the apertures 5 in the spaced apart portions 4 of a connector part to connect a mooring chain to the part. In fact, any suitable means could be used for connecting a mooring chain or line to each connector part. Each connector part could be provided with a different formation for connecting it to a mooring chain or line.

The opposite ends of each part are provided with respective, mutually cooperating formations.

The opposite end of the female part 1 defines a substantially circular opening into a short tapered bore 7 leading to a longer cylindrical bore 8 the far end of which is closed. At about one third of the length of the cylindrical bore from its open end two diametrically opposed, substantially circular apertures 9 are formed in the walls of the part. The apertures are sized to receive a locking pin 10. At about half of the length of the cylindrical bore from its open end two diametrically opposed, substantially cylindrical, protrusions 11 are formed on the inside of the bore, each lying on an axis extending substantially at right angles to an axis extending through the centres of the opposed apertures 9. The protrusions are formed by pins extending through further opposed apertures in the part, but could be otherwise formed.

The opposite end of the male part 2 is substantially cylindrical in shape, with a chamfered or radiussed corner. Spaced from the free end of the part a radial shoulder 12 is formed leading to a substantially cylindrical region of greater diameter to that of the free end of the part. The depth of the shoulder slightly exceeds the height of the protrusions 11 from the inside of the bore 8 of the female member. The shoulder 12 extends completely around the circumference of the part. The axial position of the shoulder 12 on the part varies with its position around its circumference such that the shoulder extends symmetrically between to diametrically opposed positions 13, where the shoulder is nearest the free end of the part, and two diametrically opposed positions 14 axially spaced from those closest to the free end of the part, where the shoulder is furthest from the free end of the part. The positions of the shoulder nearest and furthest from the free end of the part are substantially at right angles to each other around the circumference of the part. At the positions 13 nearest the free end of the part the shoulder changes direction at a point 13, forming a wedge or arrow shape directed towards the free end of the part. At each of the positions most remote from the free end of the part the shoulder forms a parallel sided slot 14 with a closed, radiussed end. The sides of the slot run substantially parallel to a long axis of the part and with the open end of the slot facing the free end of the part. The shoulder extends in a smooth, continuous curve between the points nearest the free end of the part and the edges of the slot located most remote from the free end of the part. The curve may be substantially helical.

A substantially circular aperture 15 extends radially through the male part along a diameter of the part substantially parallel to that which extends between the two opposed points 13 of the shoulder nearest to the free end of the part. The diameter of the aperture is slightly greater than that of the apertures 9 which extend through the female part 1. The edges of the apertures nearest to the free end of the part 12 lie on a circumference of the part which extends through the slot 14 defined by the shoulder 12 at the shoulder's position most remote from the free end of the part. The sides of the part at each end of the aperture 15 are slightly recessed.

The free end of the male part 2 is arranged to be received into the cylindrical bore 8 of the female part 1. The diameter of the free end of the male part beyond the shoulder 9 is smaller than the inside diameter of the cylindrical bore 9 of the female part, by just over the height of the protrusions 11 into that bore, so that it can pass between the protrusions. The diameter of the male part above the shoulder is just less than the inside diameter of the cylindrical part of the bore of the female part so that it is received into the cylindrical bore with a close fit and the shoulder engages with the protrusions in the bore. The shoulder is shaped such that as the male part moves into the female part any contact between the protrusions into the bore and the shoulder causes the male part to rotate relative to the female part (if necessary) so that when the male part is fully received into the bore the protrusions are guided and received into the slots 14 formed by the shoulder 12 and the apertures 9 in the sides of the female part are aligned with that 15 through the male part. A locking pin 10 can then be inserted through the aligned apertures to lock the female part with respect to the male part, preventing withdrawal of the male part from the female part. To disconnect the two parts the locking pin can be withdrawn.

The connector is intended for making subsea connections. The female member is connected to a mooring line extending from the sea bed, or to some other installation, so that the opening into the bore 7,8 faces upwards. The male part is connected to a line to be connected to the female part. The male part is lowered towards and into the female part. If necessary, a remotely operated vehicle (ROV) may be used to guide the male part into the female part. As the male part 2 is lowered into the female part 1 interaction between the shoulder 12 on the male part and the protrusions into the bore of the female part cause the male part to rotate relative to the female part so that the apertures 9,15 in the male and female parts, for receiving a locking pin 10, align. This alignment occurs automatically with no intervention required, other than to ensure that the male part enters the female part. When the male part is lowered fully into the female part an ROV is used to insert a locking pin 10 through the aligned apertures.

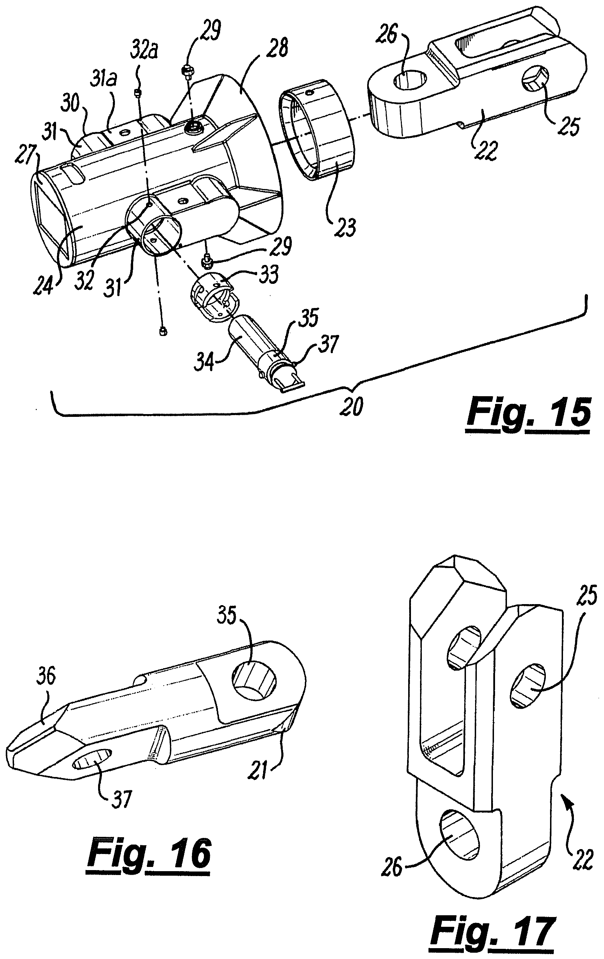

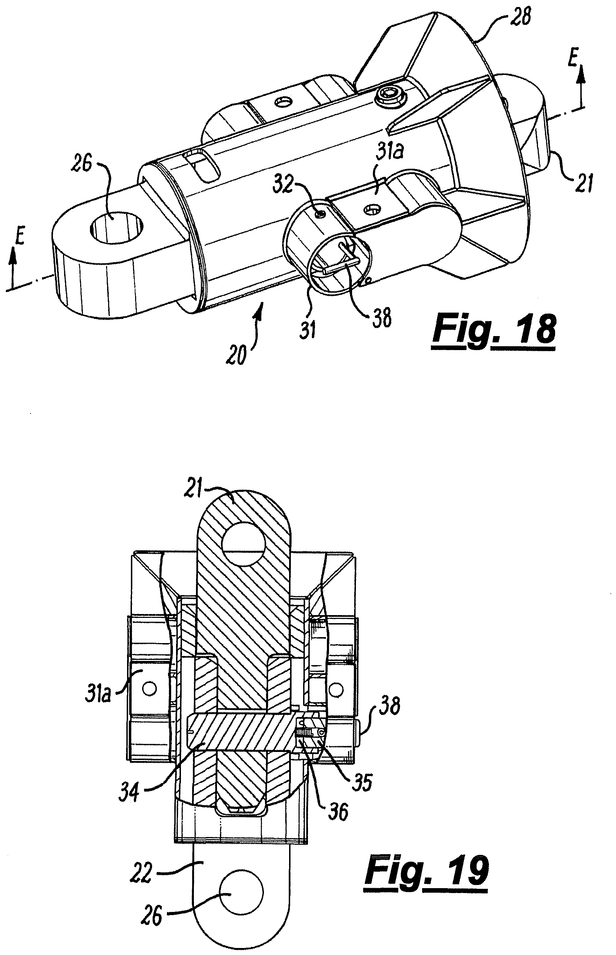

Referring to figures 15 to 21 of the drawings there is shown a second embodiment of a subsea mooring connector.

The connector comprises a first, female, part, generally 20, shown in figure 15 and a second, male, part 21 shown in figure 16.

The female part 20 comprises a forked connector body 22, sleeve 23 and housing 24.

The forked connector body 22 comprises two parallel, spaced apart, substantially identical, opposed prongs connected together by a cross portion at one end. Together, the prongs define an elongate, straight, parallel sided slot. The prongs each terminate in a free end. Part way along each prong a substantially circular aperture 25 extends through the prong. The two apertures are substantially aligned. The free ends of each prong are tapered and each comprise two faces which extend towards each other at an angle of about 45 degrees to the lateral sides of the prong. The two faces meet to form an edge which connects to a triangular end face to the prong. The faces of each prong are also angled towards each other. To the opposite side of the cross portion to the prongs there is a flat sided portion with a substantially rectangular cross-section through which a substantially circular aperture 26 extends in a direction substantially at right angles to the apertures 25 which extend through the prongs. This aperture is provided to enable the forked connector body to be connected to a chain or other line, for example by way of a shackle. The flat sided portion is thinner than the cross portion in one dimension so there is step in each of two opposite sides of the body. In another arrangement the aperture could extend in a direction parallel to those 25 through the prongs. Other arrangements are possible. Any other suitable formation could be provided on the forked body to enable it to be connected to a chain or other line.

The housing 24 comprises a generally cylindrical body open at each end. At one end, the lower end in an in-use state, a plate 27 is provided over the open end of the cylindrical body. The plate 27 defines a substantially rectangular aperture sized and shaped to allow the flat sided portion of the forked connector 22 body to pass through, but not the cross portion of that body. Thus, the flat sided portion can extend out of the housing to enable a chain or other line to be connected to the forked connector body, but the prongs will remain in the housing. At the opposite end of the housing a frustro-conical collar 28 is provided around the opening. The inside diameter of the collar 28 diverges away from the cylindrical part of the body. A substantially cylindrical sleeve 23 fits inside the housing just inside the frustro-conical collar and is secured in place with sleeve bolts 29 which passes through the cylindrical part of the housing 24 and into the sleeve 23. In use, the forked connector body 22 is inserted into the housing 24 followed by the sleeve 23 and the sleeve 23 secured in place by the sleeve bolts 29. The inner diameter of the sleeve 23 is slightly smaller than the distance between outside edges of the prongs of the forked connector body 22, so the sleeve 22 serves to retain the forked body in the housing between the sleeve 23 and the end plate 27.

Diametrically opposed, substantially circular apertures 30 are formed through the cylindrical part of the housing at a position where they are concentric with, but of a slightly larger diameter than, the apertures 25 through the prongs of the forked connector body 22. Cylindrical collars 31 with and internal diameter substantially the same as the apertures 30 are mounted to the outside of the cylindrical body over the apertures. Diametrically opposed apertures 32 are formed in one of the cylindrical collars 31, to receive bolts 32a for receiving a slotted collar 33. The slotted collar 33 is a substantially cylindrical collar into which are formed two diametrically opposed J-shaped slots with diverging openings. The external collars 31 and slotted collar 33 are arranged to receive a locking pin 34.

The collars 31 form the lower part of elongate formations 31a extending axially in diametrically opposed positions on the cylindrical body of the housing 24.

The male connector part 22 comprises a central portion with a substantially circular cross-section. At either side of the central part the connector is flattened so that it has two opposed, substantially flat, parallel faces connected by two opposed convex faces with the same radius as the central portion. The substantially flat faces at each end of the part extend substantially at right angles to each other, and the thickness of the part between its substantially flat faces is less than that of the diameter of the central portion, so that there is a shoulder between each flattened end and the central portion.

At one end an aperture 35 is formed through the flattened part to enable it to be connected to a chain or line. This end of the male part 21 has a convex surface. However, any other suitable formation could actually be provided to enable the male part to be connected to a chain or other line.

The opposite side of the male part 21 is tapered, with four faces 36 each approaching each other at an angle of substantially 45 degrees to form a flattened end to the part. A substantially circular aperture 37 also extends through this portion of the male part, between its flat faces and in a direction substantially at right angles to the aperture 35 which extends through the other end of the part.

In an alternative embodiment the substantially flat surfaces of each end of the male part 21 are substantially parallel, so that the respective apertures formed through those parts extend in parallel directions.

The tapered faces 36 of the male part 21 are arranged to cooperate with the tapered faces of the forked connector body 22 to cause the two to rotate relative to each other so that the flattened end portion of the male part 21 can be easily received between the two prongs if the forked connector body 22 without having to accurately align the male part and the forked connector body.

The aperture 37 through the male element is positioned so that when the tip of the tapered part touches the cross portion between prongs of the forked connector body 22, it aligns with the apertures 25 through the prongs so that the locking pin 34 can be inserted, through the slotted collar 33 into the housing 24, through the apertures 25 and 35 in the forked connector body 22 and male connector part 21 in order to lock the two together. The pin 34 comprises a solid rod with substantially circular cross-section. One end is chamfered to facilitate its insertion into the connector parts. At the other end there is an external shoulder, and a portion of greater external diameter which will fit through the apertures in the housing 24, but not through the apertures 25 in the forked connector body 22. The portion of greater diameter is hollow, defining a cylindrical bore. A plug 35 is slidably mounted in the bore and a spring 36 (or other resiliently compressible element) is positioned between the plug 35 and the bore, operative to resiliently urge the plug 35 out of the bore. A stop is provided to prevent the plug moving right out of the bore. Two diametrically opposed protrusions 37 are provided on the outside of the plug. A loop handle 38 is provided on the exposed, axial end of the plug 35.

In use, the female part 20 of the connector would be typically be connected to a mooring chain or other line extending from the sea bed, in an assembled state, with the chain or line being connected via the aperture 26 in the exposed, flattened end of the forked connector body and arranged so that the open end of the housing 24 with the frustro-conical collar 28 faces upwards. The male part 21 would be connected to a chain or other line, to be connected to the female part, via the aperture 35 in the male part 21.

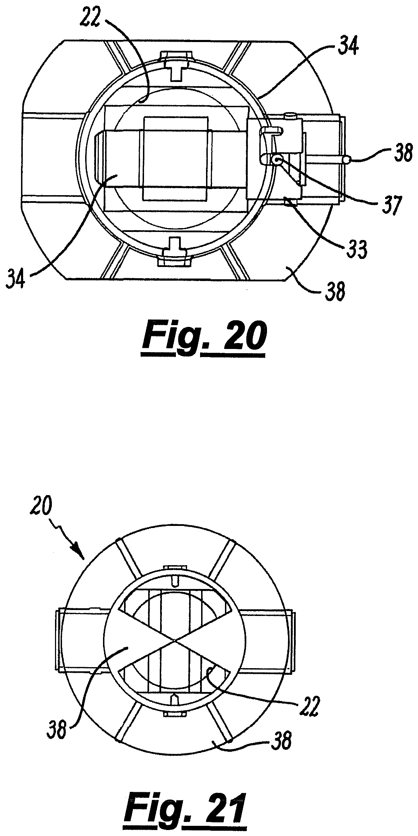

The male part 21 would then be lowered towards the female part 20 so that the tapered end of the male part 21 enters the housing 24, passing through the frustro-conical collar 28, which helps to locate the male part and guide it into the housing, and the sleeve 23, towards the forked connector body 22. The aim is to align the flattened free end of the male part with the slot defined between the prongs of the forked connector body so that the male element is received between the prongs. The process is facilitated by the sleeve 23 which helps retain the male element relative to the prongs, and the angled faces at the ends of the male element and prongs. These are arranged so that, provided the opposite lateral sides of the flattened end of the male element are sufficiently aligned with the slot between the prongs (so they lie outside the non-engagement zone 38 shown in figure 21) contact between the angled faces causes the male part to rotate relative to the female part as it approaches the female part, so that the male part 21 aligns with and is received into the slot between the prongs of the forked connector body 22.

The male part 21 is then lowered towards the forked connector body 22 until its tip contacts the cross portion of the forked connector body whereupon the aperture 37 in the male element will be aligned with the apertures 25 in the forked connector body 22. The locking pin 34 is then introduced, via the collars 31, 34 and apertures in the housing 34, through the apertures 25, 37 to lock the male part 21 and forked connector body 22 together. As the locking pin 34 is fully inserted the shoulder between the parts of smaller and larger diameter will contact a prong of the forked connector body 22. If necessary, the end plug 35 of the locking pin 34 is rotated so that the protrusions 37 are received into the flared open ends of the J-shaped slots on the slotted collar 33. The plug 35 is then urged into the collar 33, and bore of the pin 34, against the action of the spring 36, so that the protrusions travel along the slots. The plug 34 is then turned clockwise and released so that the protrusions travel to the end of the J-shaped slots and are held in position by action of the spring 36, thus locking the pin 34 in place.

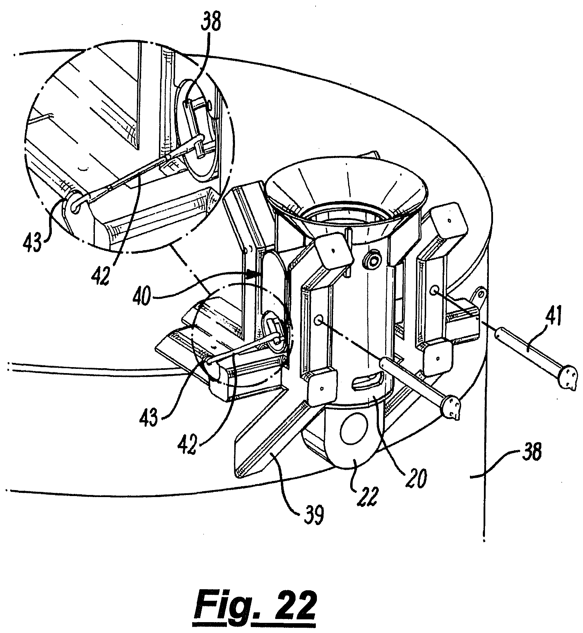

Figure 22 shows how the female part of the connector could be mounted on a pile 38. A cradle 39 is provided on the pile 38. The cradle provides two aligned slots 40 into which the elongate formations 31a on the side of the cylindrical part of the female connector part are received. Bolts 41 or other fastener may then be passed through the cradle and female part of the connector to secure it to the cradle. A lanyard 42 may be used to connect the loop handle of the locking pin to a fitting 43 on the cradle to prevent loss of the locking pin when it is removed.

Both described embodiments would typically be fabricated from steel. The second embodiment is more economical to produce, particularly in larger sizes, as less material is required to form the female part of this connector than that of the first embodiment.

The invention provides relatively simple, reliable and releasable undersea connectors which may be engaged and disengaged without the need for any significant external input to align components.

The above embodiments are described by way of example only. Many variations are possible without departing from the scope of the invention as defined in the appended claims.

## Claims

1. A subsea mooring connector comprising first (1, 20) and second (2, 21) connectable parts, each part comprising a respective structure (9, 15, 25, 37) arranged so that when the two parts are brought together and appropriately aligned with each other a locking member (10, 34) may be engaged with the two respective structures to releasably connect the two parts together, wherein: the connectable parts comprise respective mutually cooperating formations (11, 12, 36) arranged such that, as the connectable parts are brought together out of sufficient rotational alignment with each other, engagement of the respective cooperating formations causes the two parts to rotate relative to one another so that they are brought into sufficient rotational alignment to enable the locking member to be engaged with the respective structures; the second part has a free end; the cooperating formation of the second part comprises a radial shoulder (12) which is spaced from the free end of the second part and extends completely around the circumference of the second part; and **characterised by** the axial position of the shoulder on the second part varying with its position around the circumference of the second part such that the shoulder extends symmetrically between two diametrically opposed positions (13) where the shoulder is nearest the free end of the part, and two diametrically opposed positions (14) axially spaced from those closest to the free end of the part where the shoulder is furthest from the free end of the part.

2. A subsea mooring connector as claimed in claim 1 wherein the first and second parts each comprise an aperture (9, 15, 25, 37) through which a locking member may be received.

3. A subsea mooring connector as claimed in any preceding claim wherein the first part is a female part and the second part is a male part which may be received into the female part.

4. A subsea mooring connector as claimed in claim 3 wherein the first part defines a cylindrical bore (8).

5. A subsea mooring connector as claimed in claim 4 in which diametrically opposed apertures (9) are formed in the cylindrical bore and an aperture (15) extends through the second part, the two parts being arranged so that when the second part is received into the first part the opposed apertures in the first part align with the aperture in the second part so that a locking member can extend through the aligned apertures.

6. A subsea mooring connector as claimed in either claim 4 or 5 wherein the bore defined by the first part has a closed end.

7. A subsea mooring connector as claimed in any preceding claim wherein a cooperating formation on one part comprises a protrusion (11).

8. A subsea mooring connector as claimed in claim 7 when dependent on any of claims 4 to 6 where two diametrically opposed protrusions are formed inside the bore of the first part.

9. A subsea mooring connector as claimed in any preceding claim wherein the shoulder of the second part forms a wedge or arrow shape directed towards the free end of the second part

10. A subsea mooring connector as claimed in any preceding claim wherein at each of the opposed positions furthest from the free end of the second part the shoulder forms a parallel sided slot (14) with a closed, radiussed end.

11. A subsea mooring connector as claimed in claim 10 wherein the sides of the slots are substantially parallel to a long axis of the second part with the open end of each slot facing the free end of the second part.

12. A subsea mooring connector as claimed in any preceding claim wherein a substantially circular aperture (15) for receiving a locking pin extends radially through the second part along a diameter of the part which is substantially parallel to that which extends between the two opposed positions (13) of the shoulder where the shoulder is nearest the free end of the second part.

13. A subsea mooring connector as claimed in claim 12 wherein apertures (9) are formed in the first part for receiving the locking member and the diameter of the aperture (15) extending through the second part is slightly greater than the diameter of the apertures (9) extending through the first part.

## Patentansprüche

1. Unterwasser-Verankerungsverbinder mit einem ersten (1, 20) und einem zweiten (2, 21) verbindbaren Teil, wobei jedes Teil eine jeweilige Struktur (9, 15, 25, 37) hat, die dazu ausgestaltet ist, so dass, wenn die beiden Teile zusammengeführt und richtig zueinander ausgerichtet sind, ein Verriegelungsteil (10, 34) in Eingriff mit den beiden jeweiligen Strukturen gebracht kann, um die beiden Teile lösbar miteinander zu verbinden, wobei: die verbindbaren Teile miteinander kooperierende Formgebungen (11, 12, 36) aufweisen, die so ausgestaltet sind, dass, wenn die verbindbaren Teile rotationsmäßig nicht ausreichend ausgerichtet miteinander zusammengeführt werden, der Angriff der zusammenwirkenden Formgebungen aneinander bewirkt, dass die beiden Teile relativ zueinander gedreht werden, so dass sie in eine ausreichende rotationsmäßige Ausrichtung gebracht werden, um zu ermöglichen, dass das Verriegelungsteil in Eingriff mit den jeweiligen Strukturen gebracht wird; das zweite Teil ein freies Ende hat; die kooperierende Formgebung des zweiten Teils eine radiale Schulter (12) umfasst, die von dem freien Ende des zweiten Teils beabstandet ist und vollständig um den Umfang des zweiten Teils herum verläuft; und **dadurch gekennzeichnet, dass** die axiale Position der Schulter an dem zweiten Teil mit ihrer Position um den Umfang des zweiten Teils herum variiert, so dass die Schulter symmetrisch zwischen zwei diametral gegenüberliegenden Positionen (13), an denen die Schulter dem freien Ende des Teils am nächsten ist, und zwischen zwei diametral gegenüberliegenden Positionen (14) verläuft, die axial auf Abstand zu den dem freien Ende des Teils am nächstliegenden sind und bei denen die Schulter am weitesten entfernt von dem freien Ende des Teils ist.

2. Unterwasser-Verankerungsverbinder wie in Anspruch 1 beansprucht, wobei die ersten und zweiten Teile jeweils eine Öffnung (9, 15, 25, 37) aufweisen, durch die ein Verriegelungsteil aufgenommen werden kann.

3. Unterwasser-Verankerungsverbinder wie in einem vorhergehenden Anspruch beansprucht, wobei das erste Teil ein Buchsenteil und das zweite Teil ein Steckerteil ist, das in das Buchsenteil gesteckt werden kann.

4. Unterwasser-Verankerungsverbinder wie in Anspruch 3 beansprucht, wobei das erste Teil eine zylindrische Bohrung (8) definiert.

5. Unterwasser-Verankerungsverbinder wie in Anspruch 4 beansprucht, bei dem diametral gegenüberliegende Öffnungen (9) in der zylindrischen Bohrung gebildet sind und eine Öffnung (15) durch das zweite Teil verläuft, wobei die beiden Teile so ausgestaltet sind, dass, wenn das zweite Teil in das erste Teil gesteckt ist, die gegenüberliegenden Öffnung in dem ersten Teil mit der Öffnung in dem zweiten Teil ausgerichtet sind, so dass ein Verriegelungsteil sich durch die ausgerichteten Öffnungen erstrecken kann.

6. Unterwasser-Verankerungsverbinder wie in Anspruch 4 oder 5 beansprucht, wobei die durch das erste Teil definierte Bohrung ein geschlossenes Ende hat.

7. Unterwasser-Verankerungsverbinder wie in einem vorhergehenden Anspruch beansprucht, wobei eine zusammenwirkende Formgebung an dem ersten Teil einen Vorsprung (11) umfasst.

8. Unterwasser-Verankerungsverbinder wie in Anspruch 7 beansprucht, wenn abhängig von einem der Ansprüche 4 bis 6, wobei zwei diametral gegenüberliegende Vorsprünge innerhalb der Bohrung des ersten Teils gebildet sind.

9. Unterwasser-Verankerungsverbinder wie in einem vorhergehenden Anspruch beansprucht, wobei die Schulter des zweiten Teils eine Keil- oder Pfeilform bildet, die auf das freie Ende des zweiten Teils gerichtet ist.

10. Unterwasser-Verankerungsverbinder wie in einem vorhergehenden Anspruch beansprucht, wobei an jeder der gegenüberliegenden Positionen, die am weitesten vom freien Ende des zweiten Teils entfernt sind, die Schulter einen Schlitz (14) mit parallelen Seiten bildet, der ein geschlossenes, abgerundetes Ende hat.

11. Unterwasser-Verankerungsverbinder wie in Anspruch 10 beansprucht, wobei die Seiten der Schlitze im Wesentlichen parallel zu einer Längsachse des zweiten Teils sind, wobei das offene Ende jedes Schlitzes auf das freie Ende des zweiten Teils zu gerichtet ist.

12. Unterwasser-Verankerungsverbinder wie in einem vorhergehenden Anspruch beansprucht, wobei eine im Wesentlichen kreisförmige Öffnung (15) zum Aufnehmen eines Verriegelungsstiftes in radialer Richtung durch das zweite Teil entlang eines Durchmessers des Teils verläuft, die im Wesentlichen parallel zu derjenigen ist, die zwischen den beiden gegenüberliegenden Positionen (13) der Schulter verläuft, wo die Schulter dem freien Ende des zweiten Teils am nächsten ist.

13. Unterwasser-Verankerungsverbinder wie in Anspruch 12 beansprucht, wobei in dem ersten Teil Öffnungen (9) gebildet sind, um das Verriegelungsteil aufzunehmen, und wobei der Durchmesser der Öffnung (15), die durch das zweite Teil verläuft, etwas größer als der Durchmesser der Öffnungen (9) ist, die durch das erste Teil verlaufen.

## Revendications

1. Connecteur d'amarrage sous la mer, comprenant des première (1, 20) et deuxième (2, 21) parties connectables, chaque partie comprenant une structure (9, 15, 25, 37) respective, agencée de manière à ce que, lorsque les deux parties sont mises ensemble et alignées de manière appropriée l'une sur l'autre, un élément (10, 34) de verrouillage peut être enclenché avec les deux structures respectives pour connecter, de manière déconnectable, les deux parties ensemble, dans lequel : les parties connectables comprennent des conformations (11, 12, 36) respectives, coopérant mutuellement et agencées de manière à ce que, lorsque les parties connectables sont mises ensemble, sans avoir un alignement en rotation suffisant l'une sur l'autre, l'enclenchement des conformations respectives de coopération fait que les deux parties tournent l'une par rapport à l'autre, de sorte qu'elles sont mises en un alignement en rotation suffisant pour permettre d'enclencher l'élément de verrouillage avec les structures respectives; la deuxième partie a une extrémité libre; la conformation de coopération de la deuxième partie comprend un épaulement (12) radial, qui est à distance de l'extrémité libre de la deuxième partie et qui s'étend complètement autour de la circonférence de la deuxième partie; et **caractérisé par** la position axiale de l'épaulement sur la deuxième partie, variant avec sa position autour de la circonférence de la deuxième partie, de manière à ce que l'épaulement s'étende symétriquement entre deux positions (13) opposées diamétralement où l'épaulement est le plus près de l'extrémité libre de la partie et deux positions (14) opposées diamétralement, à distance axialement de celles les plus proches de l'extrémité libre de la partie où l'épaulement est le plus éloigné de l'extrémité libre de la partie.

2. Connecteur d'amarrage sous la mer tel que revendiqué à la revendication 1, dans lequel les première et deuxième parties comprennent chacune une ouverture (9, 15, 25, 37), dans laquelle un élément de verrouillage peut être reçu.

3. Connecteur d'amarrage sous la mer tel que revendiqué à l'une quelconque des revendications précédentes, dans lequel la première partie est une partie femelle et la deuxième partie est une partie mâle, qui peut être reçue dans la partie femelle.

4. Connecteur d'amarrage sous la mer tel que revendiqué à la revendication 3, dans lequel la première partie définit un alésage (8) cylindrique.

5. Connecteur d'amarrage sous la mer tel que revendiqué à la revendication 4, dans lequel des ouvertures (9), opposées diamétralement, sont formées dans l'alésage cylindrique et une ouverture (15) s'étend dans la deuxième partie, les deux parties étant agencées de manière à ce que, lorsque la deuxième partie est reçue dans la première partie, les ouvertures opposées de la première partie s'alignent sur l'ouverture de la deuxième partie, de manière à ce qu'un élément de verrouillage puisse s'étendre dans les ouvertures alignées.

6. Connecteur d'amarrage sous la mer tel que revendiqué à la revendication 4 ou 5, dans lequel l'alésage, définit par la première partie, a une extrémité fermée.

7. Connecteur d'amarrage sous la mer tel que revendiqué à l'une quelconque des revendications précédentes, dans lequel une conformation de coopération sur une partie comprend une protubérance (11).

8. Connecteur d'amarrage sous la mer tel que revendiqué à la revendication 7 lorsqu'elle dépend de l'une quelconque des revendications 4 à 6, dans lequel deux protubérances opposées diamétralement sont formées à l'intérieur de l'alésage de la première partie.

9. Connecteur d'amarrage sous la mer tel que revendiqué à l'une quelconque des revendications précédentes, dans lequel l'épaulement de la deuxième partie forme un coin ou une forme en flèche pointant vers l'extrémité libre de la deuxième partie.

10. Connecteur d'amarrage sous la mer tel que revendiqué à l'une quelconque des revendications précédentes, dans lequel, à chacune des positions opposées les plus éloignées de l'extrémité libre de la deuxième partie, l'épaulement forme une fente (14) à côté parallèle ayant une extrémité fermée arrondie.

11. Connecteur d'amarrage sous la mer tel que revendiqué à la revendication 10, dans lequel les côtés des fentes sont sensiblement parallèles à un grand axe de la deuxième partie, l'extrémité ouverte de chaque fente faisant face à l'extrémité libre de la deuxième partie.

12. Connecteur d'amarrage sous la mer tel que revendiqué à l'une quelconque des revendications précédentes, dans lequel une ouverture (15), sensiblement circulaire, de réception d'une broche de verrouillage s'étend radialement dans la deuxième partie suivant un diamètre de la partie, qui est sensiblement parallèle à celui qui s'étend entre les deux positions (13) opposées de l'épaulement, où l'épaulement est le plus près de l'extrémité libre de la deuxième partie.

13. Connecteur d'amarrage sous la mer tel que revendiqué à la revendication 12, dans lequel les ouvertures (9) sont formées dans la première partie pour recevoir l'élément de verrouillage et le diamètre de l'ouverture (15) s'étendant dans la deuxième partie est légèrement plus grand que le diamètre des ouvertures (9) s'étendant dans la première partie.
